# EUROPÄISCHE PATENTSCHRIFT

(11) **EP 3 175 965 B1**
(45) Veröffentlichungstag und Bekanntmachung des Hinweises auf die Patenterteilung: **26.07.2023**
(21) Anmeldenummer: 16002449.3
(22) Anmeldetag: 17.11.2016
(51) Int. Cl.: B29C 45/17, B29C 45/14, B60Q 3/14, B29C 44/34, B29C 44/42, B29L 31/34, B29L 31/30

(54) **ANZEIGEVORRICHTUNG SOWIE VERFAHREN ZUR HERSTELLUNG EINER BLENDE**
DISPLAY DEVICE AND METHOD FOR MANUFACTURING A SCREEN
AFFICHEUR ET PROCÉDÉ DE FABRICATION D'UN ÉCRAN

(30) Priorität: 02.12.2015 DE 102015015444
(43) Veröffentlichungstag der Anmeldung: 07.06.2017
(73) Patentinhaber: GRAMMER AG, 92289 Ursensollen (DE)
(72) Erfinder: Bittermann, Lisa, 95356 Grafengehaig (DE)
(74) Vertreter: Roche, von Westernhagen & Ehresmann

(56) Entgegenhaltungen:
- DE-A1-102005 013 879
- DE-A1-102012 101 315
- FR-A1- 2 824 510
- FR-A1- 2 937 928

## Beschreibung

Die Erfindung betrifft zunächst eine Anzeigevorrichtung. Eine solche Anzeigevorrichtung ist aus offenkundiger Vorbenutzung bekannt. Hier ist die Anzeigevorrichtung z.B. Bestandteil eines Bedienteils für bestimmte Fahrzeugfunktionen, wie z.B. Heizung, Lüftung, Sitzverstellung. Die Anzeigevorrichtung umfasst ein Formteil aus transparentem Kunststoff mit einem Anzeigebereich (Display), auf welchem die unterschiedlichen Steuerungsfunktionen in Form von Symbolen angezeigt werden und durch Berühren auch bedient werden können. Dafür ist die Anzeigevorrichtung mit einem Touch-Display versehen.

Der Anzeigebereich der Anzeigevorrichtung ist mit einer Lichtquelle beleuchtet. Im Stand der Technik ist das Formteil mit einer die Symbole aufweisenden Lackschicht versehen.

Ein unerwünschter Effekt bestand darin, dass die Lichtquelle dem Benutzer als Lichtpunkt oder Spot erschien. In Versuchen wurde ein Kunststoffmaterial mit einem Füllstoff verwendet, durch welchen das Formteil mit dem Anzeigefeld eine transluzente oder durchscheinende Eigenschaft erhielt. Dieses Kunststoffmaterial verursachte jedoch etwa die fünffachen Kosten des transparenten Kunststoffmaterials.

Die FR 2 824 510 A1 betrifft ein Armaturenbrett für ein Kraftfahrzeug. Das Armaturenbrett weist ein Kombiinstrument auf, welches in das Armaturenbrett integriert ist. Das Kombiinstrument hat die Form eines Gehäuses, dessen Boden eine Anzahl von Leuchtmitteln 6 trägt, die von Glühbirnen oder Leuchtdioden gebildet sein können. Ein den Leuchtmitteln gegenüberliegender Boden 7 ist aus einem transparenten Film oder einer transparenten Folie gebildet, die Aufschriften 8 umfasst.

Die Aufschriften beziehen sich auf verschiedene Funktionen des Fahrzeugs.

Erfindungsgemäß umfasst das Armaturenbrett 2 des Fahrzeugs eine starre innere Bewehrung aus Kunststoff 10, an der das Kombiinstrument 1 befestigt ist.

Das Armaturenbrett 2 umfasst ferner eine Außenhaut 12 aus einem flexiblen und fein gekörnten durchscheinenden Material, wie beispielsweise Polyvinylchlorid (PVC) oder Polypropylen, und einen flexiblen und durchscheinenden Schaumstoff 13, der zwischen der Außenhaut 12 und der Bewehrung 10 zwischengefügt ist. Der Schaumstoff 13 ist gefärbt und vorzugsweise auf Basis von Polypropylen oder Polyurethan.

Die FR 2 937 928 A1 betrifft eine Verkleidungsplatte eines Fahrzeugs umfassend mindestens eine ein Piktogramm bildende Zone, wobei die Zone durch eine Lichtquelle, die unter der Verkleidungsplatte angeordnet ist, beleuchtet wird. Des Weiteren umfasst die Verkleidungsplatte eine durchscheinende weiche Haut, welche die Außenfläche der Verkleidungsplatte bildet, sowie eine Tragschicht, die an der durchscheinenden Haut angeordnet ist. Die Tragschicht weist eine Öffnung auf, die mindestens zwischen der Lichtquelle und der das Piktogramm bildenden Zone angeordnet ist.

Eines der Probleme, das sich mit diesem Plattentyp stellt, besteht darin, einen identischen Griff und ein identisches Aussehen auf der gesamten Oberfläche der Haut, inklusive in der ein Piktogramm bildenden Zone, zu gewährleisten.

Die Verkleidungsplatte 1 umfasst eine durchscheinende weiche Haut 2 und eine Tragschicht 4 unter der durchscheinenden Haut 2. Die Haut
bildet die Außenseite 8 der Verkleidungsplatte, die vom Fahrgastraum des Kraftfahrzeugs aus zu sehen ist.

Die Tragschicht ist beispielsweise aus Schaumstoff hergestellt, um der Verkleidungsplatte 1 einen weichen Griff zu verleihen. Die Verkleidungsplatte 1 umfasst mindestens eine ein Piktogramm bildende Zone 10, die es ermöglicht, von hinten beleuchtete Informationen auf der Außenseite 8 der durchscheinenden Haut 2 anzuzeigen. Zu diesem Zweck ist die Lichtquelle 12 unter der durchscheinenden Haut 2 und gegenüber der das Piktogramm 10 bildenden Zone angeordnet.

DE 10 2012 101 315 A1 betrifft ein Formteil mit einem Träger und einer Dekorschicht für einen Fahrzeuginnenraum. Gemäß der Erfindung ist vorgesehen, dass der Träger zumindest in einem an den Lichtdurchlass angrenzenden Bereich als Additiv einen UV-Stabilisator aufweist, so dass bei von der Sichtseite der Dekorschicht her einfallendem UV-Laserlicht ein Aufschäumen des Kunststoffs im Wesentlichen verhindert wird und somit der Kunststoff an dem an den Lichtdurchlass angrenzenden Bereich im Wesentlichen nicht aufgeschäumt und damit transparent oder transluzent für Licht im sichtbaren Bereich ist.

DE 10 2005 013 879 A1 betrifft ein Verfahren zur Herstellung eines Kunststoffformteils. Aus DE 10 2005 013 879 A1 sind das IML-Verfahren (siehe Absatz 21) sowie das IMD-Verfahren bekannt.

Es war Aufgabe der Erfindung eine Anzeigevorrichtung mit einem Formteil zu schaffen, welches einen transluzenten Anzeigebereich aufweist und kostengünstig herstellbar ist.

Die Aufgabe wird gelöst durch eine Anzeigevorrichtung mit den Merkmalen des Anspruchs 1.

Die Anzeigevorrichtung umfasst eine Lichtquelle sowie ein Formteil. Formteil ist im Sinne der Erfindung ein Bauteil aus Kunststoff. Es kann z. B. einen Anzeigebereich aufweisen. Anzeigebereich ist im Sinne der Anmeldung z.B. ein ebener, gewölbter oder frei geformter Bereich des Formteils, auf welchem Symbole darstellbar sind. Symbole können z.B. Zahlen, Buchstaben oder Figuren sein. Die Blende kann mittels wenigstens einer Lichtquelle beleuchtet werden. Als Lichtquelle kommen alle denkbaren Leuchtmittel in Betracht, wie z.B. Glühbirne, LED, Halogenlampen, Leuchtstoffröhren etc.

Das Formteil oder zumindest der Anzeigebereich, weist eine Vielzahl von Gasblasen auf. Die Gasblasen sind in den Kunststoff integriert. Z.B. sind in dem gesamten Volumen des Formteils Gasblasen angeordnet. Z.B. sind die Gasblasen über das gesamte Volumen des Formteils diffus verteilt angeordnet. Die Gasblasen sind insbesondere in dem Kunststoff derart verteilt, dass das Formteil eine transluzente Wirkung hat. Transluzent bedeutet im Sinne der Anmeldung, dass das Formteil nur durchscheinend, nicht aber klar durchsichtig, also transparent ist. Das fertige Formteil ist ein geschäumtes Kunststoffbauteil und bildet eine Blende.

Der Kunststoff ist z.B. von einem transparenten Kunststoff gebildet. D.h. der Kunststoff ist z.B. klar durchsichtig. Die transluzente Eigenschaft erhält der Kunststoff durch die in dem Kunststoff verteilten Gasblasen.

Das Formteil ist von einem geschäumten Kunststoffbauteil gebildet. Dabei ist eine Vielzahl von Gasblasen von festem Kunststoff eingeschlossen. Grundsätzlich kann der Schaum z. B. chemisch oder physikalisch erzeugt werden, d.h. die Gasblasen können chemisch oder physikalisch in den Kunststoff eingebracht werden.

Bei dem chemischen Schäumen wird dem Kunststoff ein Treibmittel zugesetzt. Das Treibmittel kann z.B. dem Kunststoffgranulat beigemengt werden, welches als Ausgangsmaterial der Erzeugung des Formteils dient. Während der Plastifizierung des Kunststoffs zersetzt sich das chemische Treibmittel, wobei es Gas abgibt. Bei dem Gas kann es sich z.B. um CO2 handeln. Das Gas geht in der Schmelze in Lösung.

Zum physikalischen Schäumen wird während der Plastifizierung des Kunststoffs ein Fluid (Stickstoff oder Kohlendioxid) in die Schmelze geleitet. Das Gas wird z.B. direkt in den Plastifizierzylinder (Verfahren nach Mucell) oder gemäß einem alternativen Verfahren z.B. während des Einspritzvorgangs des Kunststoffs in die Düse des Plastifizierzylinders (Verfahren nach SULZER) eingeleitet. Das Gas löst sich in der Schmelze. Es expandiert, sobald die Schmelze in die Form gespritzt wird.

Das Formteil, insbesondere ein Anzeigebereich des Formteils, weist z.B. eine Anzeigeschicht auf, welche mit wenigstens einem Symbol versehen ist. Symbole, wie z.B. Zahlen, Buchstaben, Figuren etc., können z.B. auf dem als Blende ausgebildeten Formteil vorgesehen sein. Die Symbole können z.B. unmittelbar auf das Formteil gedruckt oder auf das Formteil aufgebracht sein oder auf ein Zusatzteil, wie Folie oder Kunststoffteil, aufgebracht sein, welches auf das Formteil aufgeklebt, mit dem Formteil durch Stoffschluss verbunden, oder an dem Formteil mechanisch befestigt wird.

Nachfolgend sind zwei Verfahren beschrieben, mit denen eine Lackschicht als Anzeigeschicht stoffschlüssig mit dem Formteil verbunden werden kann, indem sie hinterspritzt wird.

Bei dem In-Mold-Labeling-Verfahren (IML) wird ein mit den Darstellungen versehener Träger, z. B. eine Folie, in eine Formhälfte der Form eingelegt. Der Träger weist eine Lackschicht auf, welche die Darstelllungen ausbildet. Der Kunststoff wird dann in die Form eingespritzt. Unter dem erhöhten Druck und der erhöhten Temperatur während des Spritzgießvorgangs löst sich die Lackschicht von dem Träger und haftet an dem Formteil an. Anschließend wird die Form geöffnet und das Formteil wird der Form entnommen. Das fertige, als Blende ausgebildete Formteil ist dann mit der Lackschicht, welche die Darstellungen enthält, stoffschlüssig verbunden.

Bei dem In-Mold-Decoration-Verfahren (IMD) ist eine Trägerbahn mit einer Vielzahl von Lackschicht-Bereichen versehen, welche jeweils die Darstellungen enthalten. Die Trägerbahn wird von einer ersten Rolle abgewickelt und auf eine zweite Rolle aufgewickelt. Zwischen der ersten Rolle und der zweiten Rolle durchläuft die Trägerbahn die Spritzgießform. Einer der auf der Trägerbahn angeordneten Lackschicht-Bereiche wird so zu einer Formhälfte positioniert, dass sich beim Schließen der Form die Lackschicht unter erhöhtem Druck und erhöhter Temperatur von der Trägerbahn löst und an dem Spritzgießteil anhaftet. Während des Spritzgießvorgangs verbleibt die Trägerbahn in der Form und die Lackschichtwird von der Trägerbahn abgelöst und verbindet sich mit dem Spritzgießteil. In diesem Fall ist das fertige Formteil mit der Lackschicht versehen, welche die Darstellung enthält. Nach dem Öffnen der Form wird die Trägerbahn derart weitergefördert, dass der nächste auf der Trägerbahn angeordnete Lackschicht-Bereich in der Formhälfte positioniert wird.

Der Anzeigebereich ist z.B. mit einer Sensorvorrichtung versehen. Die Sensorvorrichtung umfasst z.B. eine Sensorschicht. Diese bildet z. B. mit dem hinterleuchteten Anzeigebereich und der Anzeigeschicht ein Touch-Display. Die Sensorschicht umfasst wenigstens einen Bereich, bei dessen Betätigung eine bestimmte Funktion aktiviert bzw. deaktiviert wird. Derartige Funktionen können z.B. die Betätigung eines Fahrzeugsitzes oder von Teilen des Sitzes, die Betätigung der Lüftung, die Betätigung des Fahrzeuglichtes etc. sein.

Die Blende ist z.B. Teil eines Gehäuses, in welchem die Lichtquelle angeordnet ist. Das Gehäuse kann z.B. weitere Elemente enthalten, die z.B. der Stromversorgung der Lichtquelle dienen.

Aus dem Stand der Technik ist das Schäumen von Kunststoffen bekannt. Weiter oben wurden das physikalische Schäumen und das chemische Schäumen zur Herstellung eines geschäumten Kunststoffbauteils beschrieben. Im Stand der Technik dient das Schäumen der Kunststoffe der Gewichtsreduktion des erzeugten Bauteils sowie der Kostenreduktion, weil weniger Material verbraucht wird. Darüber hinaus wird das Schäumen verwendet, um die Schwindung beim Erkalten des Bauteils zu kompensieren und um während des Spritzgießprozesses den Nachdruck in der Form aufrechtzuerhalten.

Das Schäumen des Kunststoffs hat erfindungsgemäß den Effekt, dass das fertig geformte Formteil transluzent ist. D.h., dass ein aus einem Schaum gebildetes Formteil die Eigenschaft aufweist, transluzent aber nicht transparent zu sein und das Licht diffus zu verteilen. Das Formteil bildet damit eine Blende.

Der Kunststoff, welcher zur Herstellung Schaumteils verwendet wird, ist z.B. ein transparenter Kunststoff. Das fertig geformte, als geschäumtes Kunststoffbauteil ausgebildete Formteil, welches aus einem transparenten Ausgangsmaterial hergestellt ist, weist eine transluzente Eigenschaft auf.

Gemäß einem anderen Aspekt betrifft die Erfindung ein Verfahren zur Herstellung einer Anzeigevorrichtung mit einer Blende.

Aus offenkundiger Vorbenutzung ist es bekannt, eine Blende herzustellen, indem ein mit Füllstoffen versehenes Kunststoffmaterial in einer Plastifiziervorrichtung plastifiziert wird. Die Füllstoffe verursachen beim fertigen Formteil die transluzente Eigenschaft. Der plastifizierte Kunststoff wird im Spritzgießverfahren in eine Form eingespritzt. Das fertige Formteil wird ggf. nachbearbeitet und mit einer Lichtquelle hinterleuchtet.

Das Verfahren war insofern verbesserungswürdig, als das verwendete Kunststoffmaterial viel höhere Kosten verursachte, als ein transparentes Kunststoffmaterial. Bei Verwendung eines transparenten Materials konnte der Betrachter des hinterleuchteten Formteils einen Lichtpunkt, auch Spot genannt, erkennen.

Es war Aufgabe der Erfindung ein Verfahren zur Herstellung einer Anzeigevorrichtung mit einer transluzenten Blende zu schaffen, welches hinsichtlich der Kosten verbessert ist

Die Aufgabe wurde gelöst durch ein Verfahren mit den Merkmalen des Anspruchs 4.

Bei dem Verfahren wird Kunststoff, z.B. in Form eines Granulats, in einen Plastifizierzylinder gefüllt und dort plastifiziert. Das Kunststoffmaterial weist z.B. bereits vor der Plastifizierung einen gasbildenden Stoff auf, der bei der Plastifizierung ein Gas bildet. Gemäß einem alternativen Verfahrensschritt wird ein Gas in den plastifizierten Kunststoff eingebracht und dort gelöst. Das kann z.B. nach dem Mucell-Verfahren oder nach dem Sulzer-Verfahren erfolgen, wie bereits oben in Bezug auf den ersten Erfindungsaspekt erwähnt. Das Gas expandiert beim Eintreten des Kunststoffs in den Formhohlraum. Beim Formen des Kunststoffbauteils wird auf diese Weise ein geschäumtes Kunststoffbauteil erzeugt. Das fertige Formteil bildet ein geschäumtes Kunststoffbauteil. Das Formteil wird z.B. derart zu einer Lichtquelle angeordnet, dass es hinterleuchtet werden kann.

Das geschäumte Formteil ist transluzent und verteilt das Licht diffus.

Das Formteil bildet z.B. einen Anzeigebereich, in welchem Symbole dargestellt werden können. Der Anzeigebereich des Formteils wird z.B. mit einer Anzeigeschicht versehen. Um Wiederholungen zu vermeiden wird in Bezug auf die Herstellung dieser Anzeigeschicht auf den ersten Aspekt der Erfindung verwiesen.

Das Formteil, insbesondere der Anzeigebereich kann z.B. mit einer Sensorschicht einer Sensorvorrichtung versehen werden. Die Sensorschicht ist z.B. parallel zu der Anzeigeschicht angeordnet. Die Sensorschicht umfasst z.B. wenigstens einen Bereich. Bei Berührung des Bereichs wird ein elektrisches Signal an eine Steuerung weitergegeben. Auf diese Weise können bestimmte Funktionen, wie z.B. Fahrzeugfunktionen, gesteuert werden.

Weitere Vorteile der Erfindung ergeben sich anhand eines in den Figuren dargestellten Ausführungsbeispiels. Die schematischen Figuren zeigen in:
Fig. 1 eine Frontansicht einer Anzeigevorrichtung, auf welcher mehrere Symbole dargestellt sind,
Fig. 2 eine Schnittdarstellung gemäß Schnittlinie II, II in Fig. 1, wobei lediglich ein Ausschnitt der Vorrichtung gezeicht ist,
Fig.3a bis 3c eine schematische Darstellung des Schäumverfahrens nach Mucell,
Fig. 4 eine Darstellung des Verfahrens nach SULZER,
Fig. 5 eine Darstellung des Verfahrensaufbaus bei dem In-Mould-Decoration-Verfahrens (IMD) und
Fig. 6 eine Darstellung des Fertigungsaufbaus bei dem In-Mould-Labeling-Verfahren (IML).

Eine Anzeigevorrichtung ist in den Figuren insgesamt mit dem Bezugszeichen 10 bezeichnet. Gleiche Bezugszeichen in den unterschiedlichen Figuren bezeichnen entsprechende Teile, auch wenn kleine Buchstaben nachgestellt oder weggelassen sind.

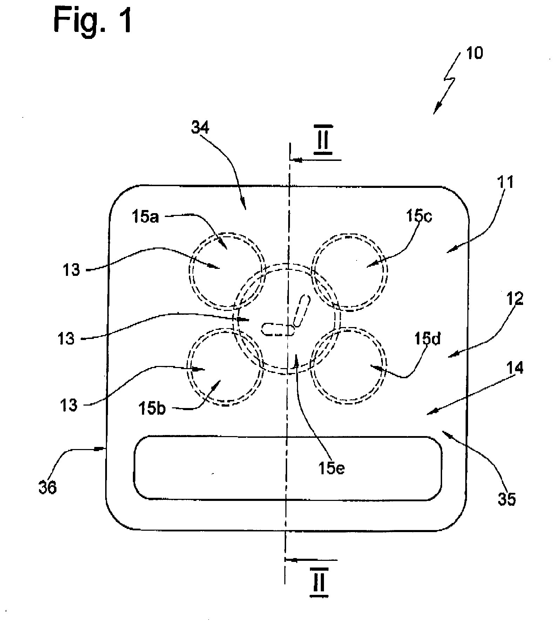

Die Anzeigevorrichtung 10 umfasst gemäß Fig. 1 ein Formteil 11, welches Teil eines Gehäuses 36 ist. Das Formteil 11 umfasst einen Anzeigebereich 34, welcher mit einer Anzeigeschicht 12, z. B. in Form einer Lackschicht, versehen ist. Die Anzeigeschicht 12 ist z.B. stoffschlüssig mit dem Formteil 11 verbunden. Alternativ könnte sie z.B. auf dem Formteil 11 aufgeklebt oder auf andere Weise daran befestigt sein oder die Schicht könnte z.B. unmittelbar auf dem Formteil 11 aufgedruckt sein.

Die Anzeigevorrichtung 10 ist im vorliegenden Ausführungsbeispiel ein Bedienteil für einen Fahrzeugsitz. Die Anzeigeschicht 12 umfasst Symbole 13, die auf unterschiedliche Fahrzeugfunktionen, wie Z.B. Lüftung, Heizung oder Fahrzeugsitz, hinweisen. Auf der Anzeigeschicht 12 ist eine Sensorschicht 14 einer Sensorvorrichtung 35 befestigt. Die Sensorschicht 14 kann z.B. in Form einer Sensorfolie ausgebildet sein. Die Symbole 13 erscheinen in Bereichen 15a bis 15e der Sensorfolie. Durch Berühren der Sensorfolie in einem dieser Bereiche wird eine bestimmte Funktion durchgeführt. Die Sensorschicht 14 ist transparent, so dass sie die Darstellung der Symbole 13 nicht beeinträchtig.

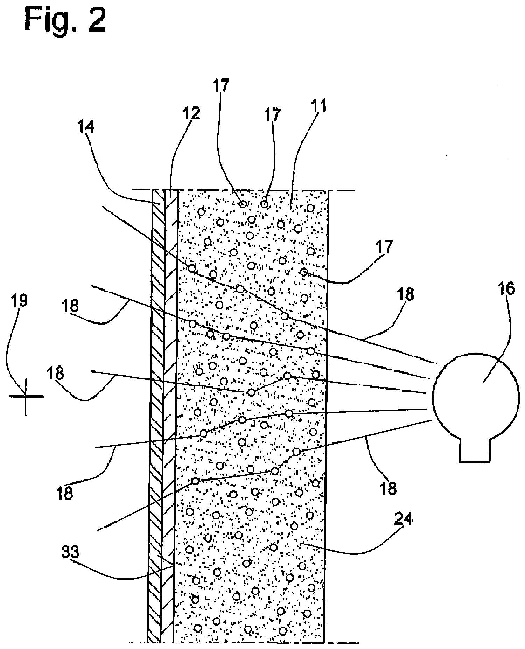

In Fig. 2 ist eine Schnittansicht der Anzeigevorrichtung 10 dargestellt. Eine Lichtquelle 16 beleuchtet das Formteil 11. Lichtstrahlen 18, passieren das Formteil 11, die Anzeigeschicht 12, sowie die Sensorschicht 14. Auf diese Weise können die Symbole 13 auf einer von der Lichtquelle 16 abgewandten Seite des Formteils 11 von einem Benutzer, der sich z. B. an dem Punkt 19 befindet, betrachtet werden.

Wie in Fig. 2 zu erkennen ist, weist die Blende 11 Gasblasen 17 auf, die diffus innerhalb der Blende verteilt sind. Lichtstrahlen 18, können den transparenten Kunststoff, der mit dem Bezugszeichen 20 angedeutet ist, passieren, bis sie auf eine Gasblase 17 auftreffen. An der Gasblase 17 wird der Lichtstrahl 18 z.B. gebrochen, an einer weiteren Gasblase 17 wird der abgelenkte Lichtstrahl 18 erneut gebrochen usw. Ein Teil der Lichtstrahlen 18 verlässt das Formteil 11 an der Seite 33 des Formteils 11. Das Formteil 11 ist somit zwar durchscheinend (transluzent), aber nicht klar durchsichtig (transparent). Die durch das Formteil 11 hindurchgehenden Lichtstrahlen 18 werden diffus verteilt, so dass die Anzeigeschicht 12 gleichmäßig ausgeleuchtet wird. Es entsteht kein Licht-Spot. Das Formteil 11 kann daher z.B. als Blende in einer Anzeigevorrichtung 10 verwendet werden.

Die Anzahl und die Größe der Schaumblasen hängt von der Nukleierung (Anzahl der Kristallisationskeime) und von weiteren physikalischen Parametern, wie Druck-, Temperatur- und Formfüllgrad ab.

Das Formteil 11 ist z.B. mit integraler Dichtverteilung als Integralschaum erzeugbar. D.h., die Dichte des Formteils 11 nimmt von außen nach innen kontinuierlich ab und weist einen porösen Kern und eine massive Randzone auf.

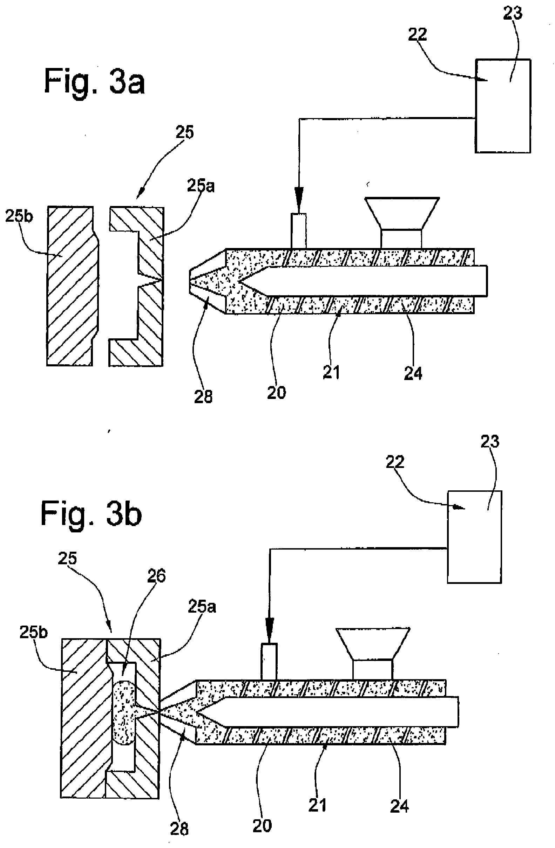

Die Herstellung des Formteils 11 kann in einer Spritzgießvorrichtung, wie nachfolgend beschrieben, vorgenommen werden. In den Fig. 3a bis 3c ist die Herstellung eines geschäumten Spritzgießteils nach Mucell beschrieben. In einen Schneckenraum 21 eines Plastifizierzylinders 20 der Spritzgießvorrichtung wird ein transparenter Kunststoff 24 in Form eines Kunststoffgranulats eingefüllt und plastifiziert. Aus einem Speicher 22 wird ein Gas 23, z. B. CO₂ oder N₂, dem Kunststoff 24 zugeführt. Das Gas 23 löst sich in dem Kunststoff 24, der in dem Schneckenraum 21 enthalten ist.

Mit dem Bezugszeichen 25 ist eine Form bezeichnet, die gemäß Fig. 3a zwei Formhälften 25a und 25b aufweistund sich im geöffneten Zustand befindet. In Fig. 3b ist die Form 25 geschlossen und der Kunststoff wird durch eine Formöffnung in einen Formhohlraum 26 eingespritzt. Während des Einspritzens in den Formhohlraum 26 verringert sich der Druck in der Kunststoffschmelze, wobei das gelöste Gas expandiert und die Gasblasen 17 entstehen.

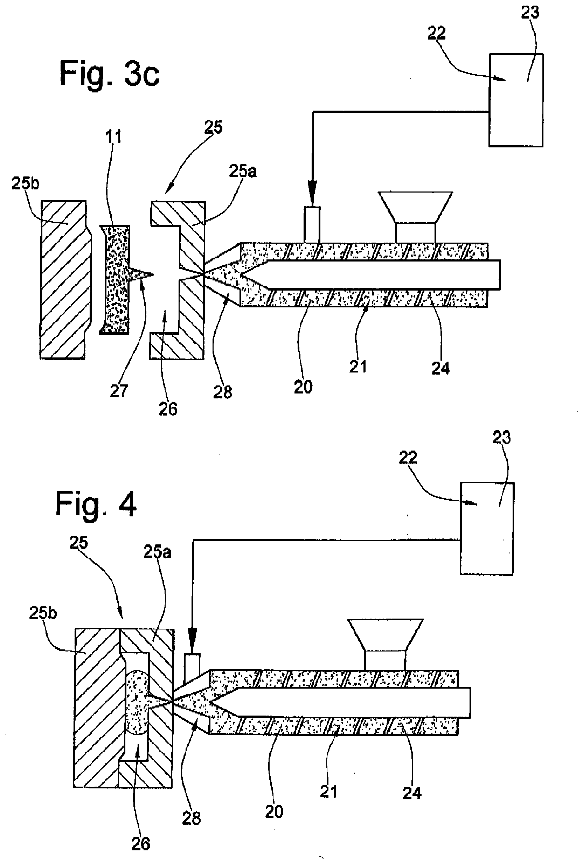

Nach dem Aushärten des Kunststoffteils wird gemäß Fig. 3c die Form geöffnet und das Formteil 11 wird aus der Form entnommen. Gemäß Fig. 3c ist das Formteil 11 noch mit einem Angussvorsprung 27 versehen, welcher anschließend entfernt wird.

Ein alternatives Schäumverfahren für Kunststoffbauteile nach SULZER ist in Fig. 4 dargestellt. Der einzige Unterschied zu dem Verfahren nach Mucell besteht darin, dass das Gas nicht in den Schneckenraum 21 des Plastifizierzylinders 20 eingeleitet wird, sondern in eine Düse 28 des Plastifizierzylinders 20. Das Gas 23 wir dabei während des Einspritzens in die Form in die Schmelze eingeleitet, wobei es sich in der Schmelze löst.

Alternativ zu den zuvor dargestellten physikalischen Methoden des Schäumens, kann das Schäumen in nicht dargestellter Weise auch chemisch erfolgen. Dabei wird dem Kunststoffgranulat vor der Plastifizierung ein Treibmittel beigemengt, welches mit zunehmender Erwärmung ein Gas freisetzt, dass sich in der Kunststoffschmelze verteilt.

Die Erzeugung der Anzeigeschicht 12 kann z. B. durch Bedrucken des fertigen Formteils 11 erfolgen.

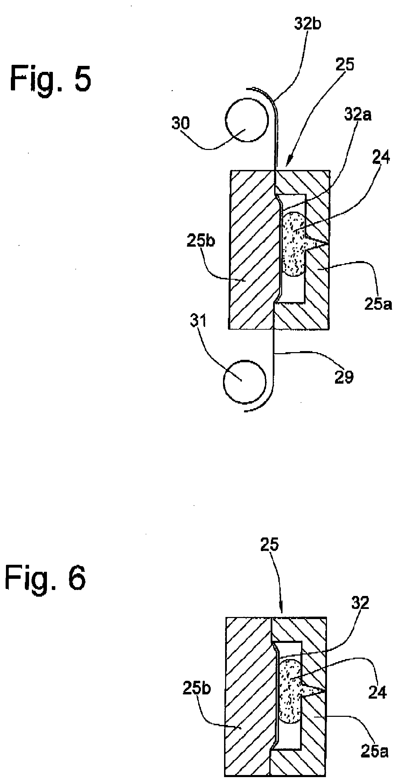

Gemäß einer Alternative kann die Anzeigeschicht 12 durch Aufbringen einer Lackschicht, z.B. mit dem In-Mould-Decoration-Verfahren (IMD) erzeugt werden. Der Grundaufbau einer entsprechenden Vorrichtung ist in Fig. 5 dargestellt. Eine Trägerbahn 29 kann von einer ersten Rolle 30 abgewickelt und auf einer zweiten Rolle 31 aufgewickelt werden. An der Trägerbahn 29 haften Bereiche von Lackschichten 32 an, welche jeweils die Symbole 13 ausbilden.

Die Trägerbahn 29 ist zwischen den beiden Formhälften der Form 25 hindurchgeführt. Vor einem Spritzgießvorgang wird die Trägerbahn 29 so positioniert, dass eine Lackschicht 32a zu dem Formhohlraum einer Formhälfte der Form 25 ausgerichtet ist. Nach dem Schließen der Form 25 und dem Einspritzen des Kunststoffmaterials löst sich die Lackschicht durch den erhöhten Druck und die erhöhte Temperatur in der Form während des Spritzvorgangs von dem Träger und verbindet sich mit dem erzeugten Kunststoffbauteil, derart dass die Lackschicht 32a an einer Außenfläche 33 des Formteils 11 anliegt. Nach dem Öffnen der Form 25 wird das Formteil 11 der Form 25 entnommen und die Trägerbahn 29 wird weitergefördert, in dem sie auf der zweiten Rolle 31 aufgewickelt wird. Eine weitere Lackschicht 32b wird zu dem Formhohlraum 26 ausgerichtet.

Ein alternatives Verfahren zum Aufbringen einer Anzeigeschicht 12 ist in Fig. 6 dargestellt. Nach dem In-Mold-Labeling-Verfahren (IML) ist die Lackschicht 32 nicht auf einer Trägerbahn angeordnet, sondern jeweils auf einen separaten, nicht dargestellten Träger angeordnet, z. B. auf einer Folie. Der Träger wird manuell in eine Formhälfte der Form 25 eingelegt. Danach wird die Form geschlossen und die Lackschicht wird hinterspritzt. Durch den erhöhten Druck und die erhöhte Temperatur in der Form während des Spritzvorgangs, löst sich die Lackschicht von dem Träger und haftet an dem Formteil 11 an. Ansonsten unterscheidet sich dieses Verfahrens nicht von dem IMD-Verfahren.

Die Sensorschicht 14 kann z.B. anschließend auf die Anzeigeschicht 12 aufgeklebt werden.

## Patentansprüche

1. Anzeigevorrichtung, insbesondere für ein Ausstattungsteil eines Kraftfahrzeugs, mit einer Lichtquelle (16) und mit einem Formteil (11) aus Kunststoff, wobei das Formteil (11) mittels der Lichtquelle (16) beleuchtet werden kann, wobei das Formteil (11) als geschäumtes Kunststoffbauteil ausgebildet ist und eine Blende bildet, **dadurch gekennzeichnet, dass** zumindest ein Anzeigebereich des Formteils, welcher mit einer Anzeigeschicht versehen ist, die wenigstens ein Symbol umfasst, eine Vielzahl von Gasblasen aufweist, die in dem Kunststoff derart diffus verteilt angeordnet sind, dass das Formteil eine transluzente Wirkung hat und dass die Lichtstrahlen das Formteil und dann die Anzeigeschicht passieren.

2. Anzeigevorrichtung nach Anspruch 1, **dadurch gekennzeichnet, dass** der Anzeigebereich (34) eine Sensorvorrichtung (35) aufweist und ein Touch-Display bildet.

3. Anzeigevorrichtung nach einem der vorhergehenden Ansprüche, **dadurch gekennzeichnet, dass** das Formteil (11) wenigstens teilweise ein Gehäuse (36) bildet.

4. Verfahren zur Herstellung einer Anzeigevorrichtung mit einer Blende, **dadurch gekennzeichnet,**
**dass** Kunststoff (24) in einer Plastifiziervorrichtung plastifiziert wird, dass der Kunststoff (24) einen gasbildenden Stoff aufweist oder dass ein Gas (23) in den plastifizierten Kunststoff (24) eingebracht wird,
**dass** mit dem plastifizierten Kunststoff (24) im Spritzgießverfahren ein Formteil (11) geformt wird, welches ein geschäumtes Kunststoffbauteil bildet, dass zumindest ein Anzeigebereich (34) des Formteils eine Vielzahl von Gasblasen aufweist, die in dem Kunststoff derart diffus verteilt angeordnet sind, dass das Formteil (11) eine transluzente Wirkung hat und
**dass** das Formteil (11) derart zu einer Lichtquelle (16) angeordnet wird, dass mittels der Lichtquelle (16) ein Anzeigebereich (34) des Formteils (11) beleuchtet werden kann,
**dass** der Anzeigebereich (34) mit einer Anzeigeschicht (12) mit wenigstens einem Symbol (13) versehen ist, und dass das Formteil (11) derart mit der Lichtquelle (16) beleuchtet wird, dass die Lichtstrahlen das Formteil (11) und dann die Anzeigeschicht (12) passieren.

5. Verfahren nach Anspruch 4, **dadurch gekennzeichnet, dass** das Formteil (11) mit einer Anzeigeschicht (12) mit wenigstens einem Symbol (13) versehen wird, insbesondere indem es bedruckt wird, oder mit einer Lackschicht (32, 32a, 32b) oder mit einem gesonderten Anzeigebauteil versehen wird, welches das Symbol (13) aufweist.

6. Verfahren nach einem der Ansprüche 4 oder 5, **dadurch gekennzeichnet, dass** die Lackschicht (32, 32a, 32b) im IMD oder im IML-Verfahren mit dem Formteil (11) verbunden wird.

7. Verfahren nach einem der Ansprüche 4 bis 6, **dadurch gekennzeichnet, dass** der Anzeigebereich (34) mit einer Sensorschicht (14) einer Sensorvorrichtung (35) versehen wird und ein Touch-Display bildet.

## Claims

1. Display device, in particular for an accessory of a motor vehicle, having a light source (16) and having a moulded part (11) made of plastic, wherein the moulded part (11) can be lit by means of the light source (16), wherein the moulded part (11) is designed as a foamed plastic component and forms a panel, **characterised in that** at least one display region of the moulded part, provided with a display layer comprising at least one symbol, has a plurality of gas bubbles that are arranged diffusely distributed in the plastic such that the moulded part has a translucent effect and that the light beams pass the moulded part and then the display layer.

2. Display device according to claim 1, **characterised in that** the display region (34) has a sensor device (35) and forms a touch display.

3. Display device according to one of the preceding claims, **characterised in that** the moulded part (11) at least partially forms a housing (36).

4. Method for producing a display device having a panel, **characterised in that** plastic (24) is plasticised in a plasticisation device,
**in that** the plastic (24) has a gas-forming material or **in that** a gas (23) is introduced into the plasticised plastic (24),
**in that** a moulded part (11) is moulded with the plasticised plastic (24) in the injection moulding method, said moulded part (11) forming a foamed plastic component, **in that** at least a display region (34) of the moulded part has a plurality of gas bubbles that are arranged diffusely distributed in the plastic such that the moulded part (11) has a translucent effect and
**in that** the moulded part (11) is arranged in relation to a light source (16) such that a display region (34) of the moulded part (11) can be lit by means of the light source (16),
**in that** the display region (34) is provided with a display layer (12) having at least one symbol (13), and **in that** the moulded part (11) is lit with the light source (16) such that the light beams pass the moulded part (11) and then the display layer (12).

5. Method according to claim 4, **characterised in that** the moulded part (11) is provided with a display layer (12) having at least one symbol (13), in particular **in that** it is printed or is provided with a layer of paint (32, 32a, 32b) or with a separate display component having the symbol (13).

6. Method according to one of claims 4 or 5, **characterised in that** the paint layer (32, 32a, 32b) is connected to the moulded part (11) in the IMD or in the IML method.

7. Method according to one of claims 4 to 6, **characterised in that** the display region (34) is provided with a sensor layer (14) of a sensor device (35) and forms a touch display.

## Revendications

1. Dispositif d'affichage, en particulier pour un élément d'équipement d'un véhicule automobile, avec une source lumineuse (16) et avec une pièce moulée (11) en matière synthétique, la pièce moulée (11) pouvant être éclairée par la source lumineuse (16) et la pièce moulée (11) étant constituée comme une pièce moulée en mousse de matière synthétique et formant un panneau, **caractérisé en ce qu'**au moins la zone d'affichage de la pièce moulée, laquelle est dotée d'une couche d'affichage qui comprend au moins un symbole, comporte une multitude de bulles de gaz qui sont réparties de manière diffuse dans la matière synthétique de telle sorte que la pièce moulée a un effet translucide et que les rayons lumineux traversent la pièce moulée, puis la couche d'affichage.

2. Dispositif d'affichage selon la revendication 1, **caractérisé en ce que** la zone d'affichage (34) comporte un dispositif de détection (35) et forme un écran tactile.

3. Dispositif d'affichage selon une des revendications précédentes, **caractérisé en ce que** la pièce moulée (11) forme au moins en partie un boîtier (36).

4. Procédé pour fabriquer un dispositif d'affichage doté d'un panneau, **caractérisé en ce**
**que** la matière synthétique (24) est plastifiée dans un dispositif de plastification,
**que** la matière synthétique (24) comporte une matière produisant du gaz ou qu'un gaz (23) est introduit par un procédé de moulage par injection dans la matière synthétique plastifiée (24),
**qu'**avec la matière synthétique plastifiée (24) est formée dans le procédé de moulage par injection une pièce moulée (11) qui constitue une pièce en mousse de matière synthétique, qu'au moins une zone d'affichage (34) de la pièce moulée comporte une multitude de bulles de gaz qui sont réparties de manière diffuse dans la matière synthétique de telle sorte que la pièce moulée (11) a un effet translucide et
**que** la pièce moulée (11) est disposée de telle sorte par rapport à une source lumineuse (16) qu'une zone d'affichage (34) de la pièce moulée (11) peut être éclairée au moyen de la source lumineuse (16),
**que** la zone d'affichage (34) est dotée d'une couche d'affichage (12) avec au moins un symbole (13), et que la pièce moulée (11) est éclairée de telle sorte par la source lumineuse (16) que les rayons lumineux traversent la pièce moulée (11), puis la couche d'affichage (12).

5. Procédé selon la revendication 4, **caractérisé en ce que** la pièce moulée (11) est dotée d'une couche d'affichage (12) avec au moins un symbole (13), en particulier celle-ci étant imprimée ou dotée d'une couche de peinture (32, 32a, 32b) ou d'un élément d'affichage distinct qui présente le symbole (13).

6. Procédé selon une des revendications 4 ou 5, **caractérisé en ce que** la couche de peinture (32, 32a, 32b) est reliée à la pièce moulée (11) par le procédé IMD ou IML.

7. Procédé selon une des revendications 4 à 6, **caractérisé en ce que** la zone d'affichage (34) est dotée d'une couche de détection (14) d'un dispositif de détection (35) et forme un écran tactile.
